# EUROPÄISCHE PATENTSCHRIFT

(11) **EP 0 491 663 B1**
(45) Veröffentlichungstag und Bekanntmachung des Hinweises auf die Patenterteilung: **10.01.1996**
(21) Anmeldenummer: 91810978.6
(22) Anmeldetag: 13.12.1991
(51) Int. Cl.: G01N 21/88

(54) **Verfahren und Vorrichtung zur Prüfung von optischen Bauteilen, insbesondere augenoptischen Bauteilen und Einrichtung zum Beleuchten von klar-transparenten Prüfobjekten**
Procedure and apparatus for the examination of optical components, particularly ophthalmic components, and device for the illumination of transparent objects under examination
Procédé et dispositif pour l'inspection d'éléments optiques, notamment d'éléments ophtalmiques, et appareil pour l'illumination d'objets transparents à examiner

(30) Priorität: 19.12.1990 CH 4032/90; 19.07.1991 DE 4124003
(43) Veröffentlichungstag der Anmeldung: 24.06.1992
(73) Patentinhaber: CIBA-GEIGY AG, CH-4002 Basel (CH); BODENSEEWERK GERÄTETECHNIK GmbH, D-88641 Überlingen (DE)
(72) Erfinder: Höfer, Peter, W-8750 Aschaffenburg (DE); Hagmann, Peter, Dr., W-8759 Hösbach-Bahnhof (DE); Hauck, Roland, Dr., W-7769 Hohenfels 5 (DE); Geissler, Wolfgang, W-7525 Bad Schönborn (DE); Lutz, Hubert, CH-3172-Niederwangen (CH)

(56) Entgegenhaltungen:
- EP-A- 0 063 761
- EP-A- 0 249 799
- DE-A- 3 432 002
- FR-A- 2 433 767
- GB-A- 2 058 393
- GB-A- 2 171 812
- JP-A- 2 257 007
- US-A- 3 988 068
- US-A- 4 733 360
- IBM TECHNICAL DISCLOSURE BULLETIN. Bd. 25, Nr. 4, September 1982, NEW YORK US Seite 2047; N.A. FELISS ET AL.: 'Surface analyzer'

## Beschreibung

### Verfahren von Vorrichtung zur Prüfung von optischen Bauteilen, insbesondere augenoptischen Bauteilen und Einrichtung zum Beleuchten von klar-transparenten Prüfobjekten

Die Erfindung betrifft ein Verfahren und eine Vorrichtung zum Prüfen von optischen Bauteilen, bei dem von dem jeweils zu prüfenden Bauteil ein Bild hergestellt wird und durch Bildanalyse Fehler am abgebildeten Gegenstand erfasst werden, sowie eine Beleuchtungseinrichtung zum Beleuchten klar-transparenter Prüfungsobjekte.

Bei der Herstellung und Qualitätsprüfung von optischen Bauteilen, insbesondere von augenoptischen Bauteilen, wie Kontaktlinsen, wird die Prüfung noch visuell durchgeführt. In diesem Zusammenhang kann beispielsweise auf die DIN-Vorschrift 58 223 hingewiesen werden. Die visuelle Qualitätskontrolle stellt eine nur subjektive Prüfung dar, die personenabhängig ist und tageszeitlichen Schwankungen unterworfen wird. Damit ergeben sich bei der Qualitätsprüfung zwangsläufig Verschiebungen der Qualitätsstandards, und es läßt sich eine ausreichende Reproduzierbarkeit der Qualität der Produkte nicht erreichen. Außerdem sind die Möglichkeiten einer Automatisierung, insbesondere bei der Massenfertigung solcher Bauteile, erheblich beeinträchtigt.

Aus der EP 0 359 084 A2 ist es bei der Kontaktlinsenherstellung bekannt, das Vorhandensein bzw. Fehlen von Kratzern und dergl. auf der gekrummten Oberfläche der Linse durch eine optische Projektoreinrichtung und eine Bildverarbeitungseinrichtung zu erfassen. Aus der genannten Druckschrift ergibt sich jedoch nicht, wie die Projektoreinrichtung und die Bildverarbeitungseinrichtung ausgebildet sind, um sie für eine reproduzierbare Qualitätskontrolle, insbesondere bei der automatischen Fertigung von optischen Bauteilen, einsetzen zu können.

Bezüglich der Beleuchtung von Prüfobjekten ist bekannt, Objekte in einem Mikroskop mittels "Dunkelfeldbeleuchtung" zu beleuchten. Bei einer solchen Dunkelfeldbeleuchtung wird ein Objekt durch eine Lichtquelle und eine Beleuchtungsoptik (Kondensor) so beleuchtet, dass das Beleuchtungslichtbündel selbst nicht in den Strahlengang des Mikroskops gelangt. Beobachtet wird dann nur das von dem Objekt in den Strahlengang gestreute licht.

Es sind Beleuchtungsoptiken für Dunkelfeldbeleuchtung bekannt, bei denem im Strahlengang einze zentrale Blendenscheibe angeordnet ist, welche den mittleren Teil des Beleuchtungslichtbündels abdeckt. Auf eine Kondensorlinse fällt dann ein ringförmiges Beleuchtungslichtbündel, das von den Randteilen der Kondensorlinse in der Ebene des Objekts gesammelt und dann seitlich an dem Strahlengang der Mikroskopoptik vorbeigeleitet wird.

Eine Vorrichtung zur optischen Untersuchung von Kontaklinsen mittels Dunkelfeldbeleuchtung ist aus der DE-A-34 32 002 bekannt. Bei der dort beschriebenen Vorrichtung ist ein auf die Beleuchtungseinrichtung eines Stereomikroskops aufsetzbarer Halter vorgesehen, der aus einem Ring und zwei waagerechten Stäben bzw. Drähten besteht, auf die die Kontaktlinse aufgelegt wird.

Es ist auch ein sog. "Kardioidkondensor" bekannt, bei welchem ein ringförmiges Beleuchtungslichtbündel an einer objektseitigen, konkaven Fläche einer ersten Linse total reflektiert wird. Das so nach aussen abgelenkte Lichtbündel fällt auf eine im wesentlichen zylindrische Mantelfläche einer zweiten Linse. Von dieser Mantelfläche wird das Lichtbündel wieder total reflektiert. Die zweite Linse sammelt das vom Rand her einwärts reflektierte Lichtbündel wieder in der Ebene des Objekts. Von dort aus läuft das Lichtbündel wieder konisch an dem Strahlengang des Mikroskops vorbei (Grimsehls Lehrbuch der Physik, 11. Aufl. (1943) Bd.2, Verl. B.G. Teubner, Seiten 707-708). Bei diesen bekannten Anordnungen handelt es sich um die Beleuchtung von Objekten in einem Mikroskop mit einer unveränderlichen Beleuchtungsoptik.

Aus der JP-A-2 257 007 ist schliesslich eine Vorrichtung zur Prüfung von Linsen bekannt. Diese Vorrichtung weist eine Beleuchtungseinrichtung zur Beleuchtung der Linse auf sowie eine Bildaufnahmeeinrichtung. Jedoch wird dabei nur ein Teil der Linse, nämlich der Rand, aufgenommen und in ein binäres Bild gewandelt. Anschliessend werden die Abweichungen der Y-Koordinate der einzelnen binären Bildpunkte von den Punkten, die sich bei der Anwendung der Methode der kleinsten Quadrate ergeben, bestimmt. Augehend von diesem Stand der Technik ist es eine Aufgabe der Erfindung, ein Verfahren und eine Vorrichtung zur Prüfung von optischen Bauteilen zu schaffen, die zur Automatisierung der Prüfschritte und der Herstellung der optischen Bauteille beitragen. Prüfobjekte können dabei optische Elemente wie Linsen oder auch Brillengläser, Kontaktlinsen etc. sein. Der Erfindung liegt insbesondere auch die Aufgabe zugrunde, die Beleuchtungseinrichtung so auszubilden, dass sie eine automatische Fehlerauswertung durch Beobachtung der Prüf- objekte mittels einer elektronischen Bildaufnahmevorrichtung und Bildverarbeitung gestattet.

Diese Aufgabe wird erfindungsgemäss durch die Merkmale des Anspruchs 1 gelöst, sofern es das Verfahren betrifft, und durch die Merkmale des Anspruchs 8, sofern es die Vorrichtung betrifft.

Bei der Erfindug kommt eine Beleuchtungseinrichtung zum Einsatz, die die gleichzeitige konntrastreiche Darstellung aller am zu untersuchenden Bauteil interessierenden Strukturen als flächenhafte Gebilde ermöglicht. Kombiniert mit dieser Beleuchtungseinrichtung kommt bierfür eine Bildaufnahmeeinrichtung zum Einsatz mit einem optischen Bildsensor. Die Bildaufnahmeeinrichtung kann gegebenenfalls mit einer Abbildungsoptik ausgestattet sein, mit der das Kontrastbild aufgenommen werden kann. Das kontrastbild wird an eine Bildverarbeitungseinrichtung weitergegeben. Hierzu ist es von Vorteil, das Kontrastbild in Bildelemente (Pixel) aufzuteilen. Bei Verwendung eines CCD als Bildsensor ist diese Aufteilung in Bildelemente durch den Aufbau bzw. Konstruktion des CCD schon vorbestimmt. Die Bildelemente werden mit Hilfe einer Umsetzereinrichtung in digitale Bildsignale umgesetzt, die gespeichert und verarbeitet werden können. Auf diese Weise ist eine Analyse der Strukturmerkmale des zu überprüfenden optischen Bauteils (eine Flächenbestimmung) und mithin der jeweils im Kontrastbild erfaßten Fehler möglich. In vorteilhafter Weise wird für diese Umsetzung zunächst ein Binärbild erzeugt.

Zur Erzeugung des Kontrastbildes wird eine Dunkelfeldbeleuchtung des zu prüfenden Bauteils durchgeführt. Unter Zuhilfenahme von entsprechend gestreutem Licht wird das zu prüfende Bauteil gegen einen dunklen Hintergrund beleuchtet und mit Hilfe einer Kamera, die gegebenenfalls den Bildsensor enthält, aüfgenommen. Der Bildsensor ist bevorzugt als CCD ausgebildet. Auf diese Weise wird von dem beleuchteten Prüfling ein Dunkelfeldbeleuchtungsbild aufgenommen. Ein derartiges Bild gibt eine kontrastreiche Darstellung von Fehlern, wobei diese Fehler als Flächen auf der Kontrastbilddarstellung in Erscheinung treten. Beispielsweise stellen sich bei einer Dunkelfeldbeleuchtung die Fehler als helle Flecken mit bestimmten Flächen gegen einen dunklen (schwarz oder grau), nicht fehlerbehafteten Hintergrund dar. Bei diesen Fehlern kann es sich um Kratzer, Löcher, Luftblaseneinschlüsse, Risse, anhaftende Bruchstücke und Verschmutzungen oder Schwundstellen und dgl., handeln. Diese Fehler stellen sich als Flächen in der Bildfläche dar. Es können jedoch auch Randfehler des Prüflings, die als flächenhafte Gebilde darstellbar sind, ermittelt werden. Hierbei kann es sich um Randausbrüche Schwimmhaüte, Risse, am Rand haftende Bruchstücke, Verschmutzungen und Schwundstellen am Rand und Randinhomogenitäten handeln. Die Bildflächen der jeweils erfaßten Fehler können in Pixel (Bildflächenelemente) unterteilt werden. Durch die Anzahl der jeweiligen Bildflächenelemente (Pixel) läßt sich das Ausmaß eines jeweiligen Fehlers oder der Gesamtheit der Fehler bestimmen. Es kann hierzu eine Abtast/Zähl-Einrich- tung vorgesehen sein, mit der sich ein Auszählen der Pixel durchführen läßt. Die ermittelte Pixelanzahl für die einzelnen Bildflächen der erfaßten Fehler wird mit einer vorbestimmten Pixelzahl verglichen. Diese vorbestimmte Pixelzahl stellt einen Qualitätsstandard, den der Prüfling einzuhalten hat, dar.

Bei der Prüfung kann der Prüfling auch in unterschiedliche Zonen aufgeteilt werden, für die unterschiedliche Grenzwerte als Qualitätsstandards vorgegeben sind. Beispielsweise können bei der Prüfung einer Kontaktlinse für die optische Zone, und die Lentikularzone unterschiedliche Qualitäts-standards in Form von vorgegebenen Bildflächen festgelegt werden. Die Qualität des Randes der Linse kann ebenfalls anhand der Form des flächenhaften Bildes des Kontaktlinsenrandes bestimmt werden.

In bevorzugter Weise kann die Erfindung bereits im Verlauf der einzelnen Fertigungsschritte bei der Herstellung des optischen Bauteils zum Einsatz kommen. Es kann hierzu die erfindungsgemäße Fehlererfassung und Qualitätskontrolle bei einem oder mehreren der Fertigungsschritte integriert sein, so daß man eine fortlaufende automatische Qualitätskontrolle während der Fertigung des optischen Bauteils hat. Man kann hierbei für den jeweiligen Fertigungsschritt entsprechende Qualitätsstandards vorgeben, so daß man für jeden der Herstellungsschritte reproduzierbare Qualitätskontrollen in der automatischen Fertigung gewinnt. Die Erfindung kann in vorteilhafter Weise bei der Qualitätskontrolle von optischen Bauteilen, beispielsweise optischen Linsen, insbesondere augenoptischen Bauteilen, wie Brillengläsern, Kontaktlinsen, Intraokularlinsen und dergl., zum Einsatz kommen. Hierbei kann eine automatische Endkontrolle und, wie schon erläutert, auch eine ständige automatische Qualitätsüberwachung während der Fertigung der Bauteile erreicht werden.

Beispielsweise kann bei der Kontaktlinsenherstellung sowohl eine Trockenprüfung (Prüfung an Luft) als auch eine Naßprüfung (Prüfung in Aufbewahrungslösung) von hydratisierten Kontaktlinsen durchgeführt werden. Falls die Bauteile in durchsichtigen Behältern untergebracht sind, ist es möglich, eine Endkontrolle der eingebrachten Bauteile durchzuführen.

In der bereits erwähnten Beleuchtungseinrichtung sind eine Lichtquelle und eine Beleuchtungsoptik zur Beleuchtung der Prüfobjekte in Dunkelfeldbeleuchtung vorgesehen. DieBeleuchtungsgeometrie der Beleuchtungsoptik ist zur Anpassung an das Prüfobjekt einstellbar.

Auf diese Weise kann durch geeignete Einstellung der Beleuchtungsoptik eine an die Abmessungen und Form der Prüfobjekte angepasste Beleuchtung erreicht werden, welche Fehler wie Lunker, Risse, o.dgl. als deutliche Kontraste erscheinen lässt. Die so erscheinenden Kontraste können durch eine elektronische Bildaufnahmevorrichtung erfasst und mit Mitteln der Bildverarbeitung zur Fehlererkennung ausgewertet werden. Es hat sich gezeigt, dass eine solche Darstellung von Fehlern klar-transparenter Prüfobjekte als Kontraste mittels einer Dunkelfeldbeleuchtung möglich ist, dass es aber hierzu erforderlich ist, die Beleuchtungsoptik einstellbar zu machen. Weitere Ausgestaltungen der Erfindung sind Gegenstand der abhängigen Ansprüche.

Anhand von Figuren wird an Ausführungsbeispielen die Erfindung näher erläutert.

Es zeigt:
- Fig. 1: Schematisch eine Bildanalysevorrichtung, die ein Ausführungsbeispiel der Erfindung ist;
- Fig. 2: ein von der Bildananlysevorrichtung der Fig. 1 dargestelltes Bild des Prüflings mit schematisch eingezeichneten flächenhaft wiedergegebenen Fehlern;
- Fig. 3: ein Positionierschema bei der Bildanalyse eines als Kontaktlinse ausgebildeten Prüflings;
- Fig. 4: eine Zoneneinteilung an einem als Kontaktlinse ausgebildeten Prüfling;
- Fig. 5: ein Erfassungsschema für Randfehler an einem als Kontaktlinse ausgebildeten Prüfling;
- Fig. 6: eine Kurvendarstellung der gemäß Fig. 5 erfaßten Randfehler;
- Fig. 7: schematisch verschiedene Herstellungsschritte bei der Herstellung einer Kontaktlinse mit integrierten automatischen Prüfschritten;
- Fig. 8: schematisch verschiedene Herstellungsschritte eines weiteren Herstellungsverfahrens für Kontaktlinsen mit integrierten automatischen Prüfschritten;
- Fig. 9: eine für eine Endprüfung mit Hilfe des erfindungsgemäßen Verfahrens geeignete Verpackung, insbesondere für Kontaktlinsen in Draufsicht;
- Fig. 10: eine schnittbildliche Darstellung der in Fig. 9 gezeigten Verpackung;
- Fig. 11: ein Blockschaltbild für eine in Fig. 1 gezeigte Bildanalyseeinrichtung; und
-
- Fig. 12: einen Längsschnitt einer Beleuchtungseinrichtung.

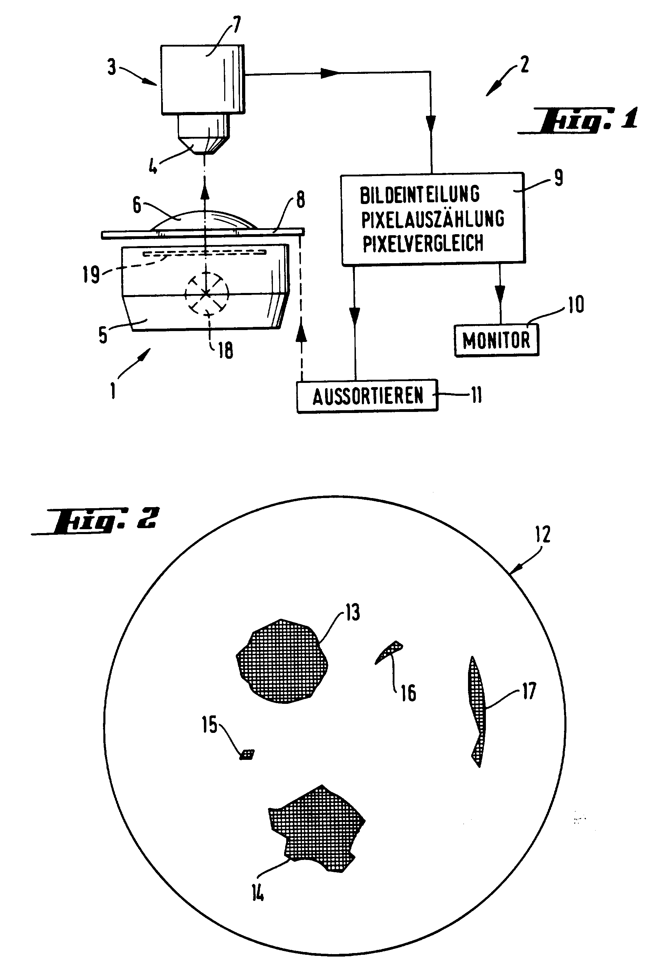

In der Fig. 1 ist eine Vorrichtung gezeigt, die zur Prüfung von optischen Bauteilen dient. Ein zu prüfendes Bauteil 6 befindet sich auf einer Halte- und Transporteinrichtung 8. Eine Beleuchtungseinrichtung 1 beinhaltet einen Kontrastbildgeber 5, der als Dunkelfeldbeleuchtungseinrichtung ausgebildet sein kann. Mit Hilfe einer Lichtquelle 18, deren Licht mehrfach reflektiert und gestreut wird, wird das zu prüfende Bauteil 6 vor einem dunklen Hintergrund 19 beleuchtet.

Für die Verarbeitung des auf diese Weise dargestellten Kontrastbildes bzw. Dunkelfeldbildes ist eine Bildverarbeitungseinrichtung 2 vorgesehen. Diese Bildverarbeitungseinrichtung 2 umfaßt eine Bildaufnahmeeinrichtung 3 mit einem Bildsensor 4. Es kann sich hier beispielsweise um eine Videokamera handeln, deren Bildsensor 4 als CCD ausgebildet ist.

Die Videokamera kann an einen nicht näher dargestellten Monitor angeschlossen sein, auf welchem das flächenhafte Kontrastbild sichtbar gemacht werden kann. Wenn der Bildsensor als CCD ausgebildet ist, hat man automatisch aufgrund des CCD-Aufbaus eine Bildaufteilung in Bildelemente (Pixel), beispielsweise in 500 x 700, d.h. es ergibt sich hier von selbst eine Bildaufteilung. Mit Hilfe einer Lese-und Umsetzereinrichtung 7 können die einzelnen Bildelemente des Kontrastbildes abgetastet und in Binärsignale umgewandelt werden, die dann abgespeichert und weiterverarbeitet werden, wie das im folgenden erläutert wird.

Ein Ausführungsbeispiel für ein Kontrastbild 12 eines Prüflings ist in Form eines Binärbildes in Fig. 2 dargestellt. Es kann sich hier beispielsweise um das Kontrastbild 12 einer zu prüfenden Kontaktlinse handeln. Fehler auf der Oberfläche des Prüflings 6 oder eingeschlossene Fehler sind in dem Kontrastbild 12 flächenhaft dargestellt. Es handelt sich hier beispielsweise um die flächenhaft dargestellten Fehler 13, 14, 15, 16 und 17. Diese können Löcher, Luftblasen, Einschlüsse, anhaftende Bruchstücke usw. darstellen.

Wie die Fig. 2 zeigt, werden diese flächenhaft dargestellten Fehler bzw. Fehlerflächen in einzelne Bildelemente, sogenannte Pixel, unterteilt. Eine solche Unterteilung kann beispielsweise mit Hilfe des Bildsensors 4 (CCD) in Zusammenwirkung mit der Lese- und Umsetzereinrichtung 7 durchgeführt werden.

An die Einrichtung 7 ist eine Bildanalyseeinrichtung 9 (Bildeinteilung, Pixelauszählung, Pixelvergleich) angeschlossen. Diese erfasst die Anzahl der Pixel, beispielsweise durch Zählen. Dazu kann die Bildanalyseeinrichtung 9 eine entsprechend ausgebildete Zähleinrichtung (Pixelzähler 23 inFig. 11) aufweisen.

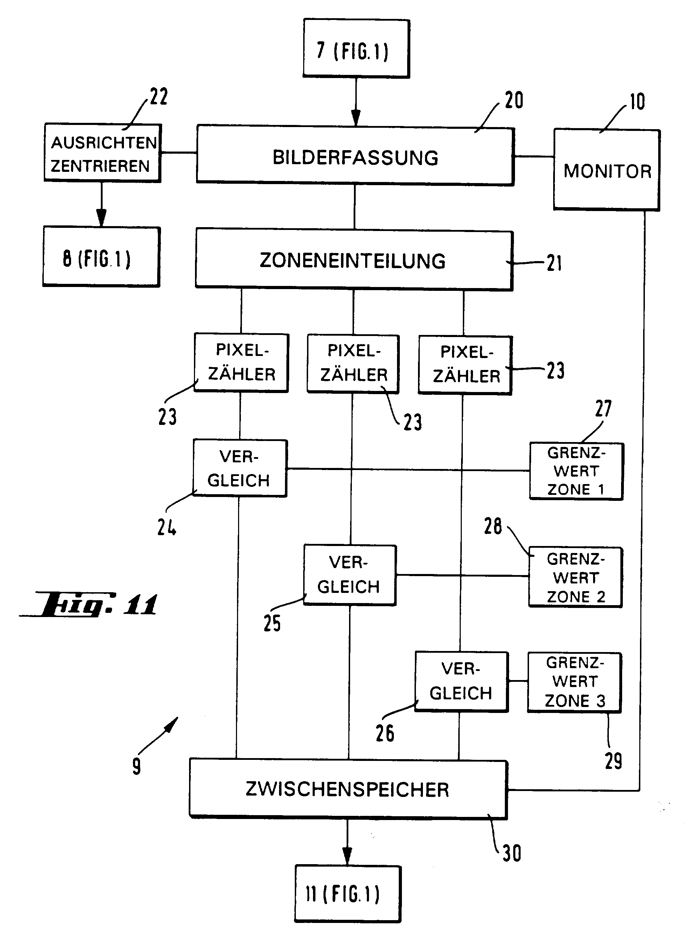

Unter Bezugnahme auf die Fig. 11, die schematisch ein Blockschaltbild für die in der Bildanalyseeinrichtung 9 enthaltenen Funktionseinheiten darstellt, wird die Arbeitsweise der Bildanalyseeinrichtung 9 erläutert.

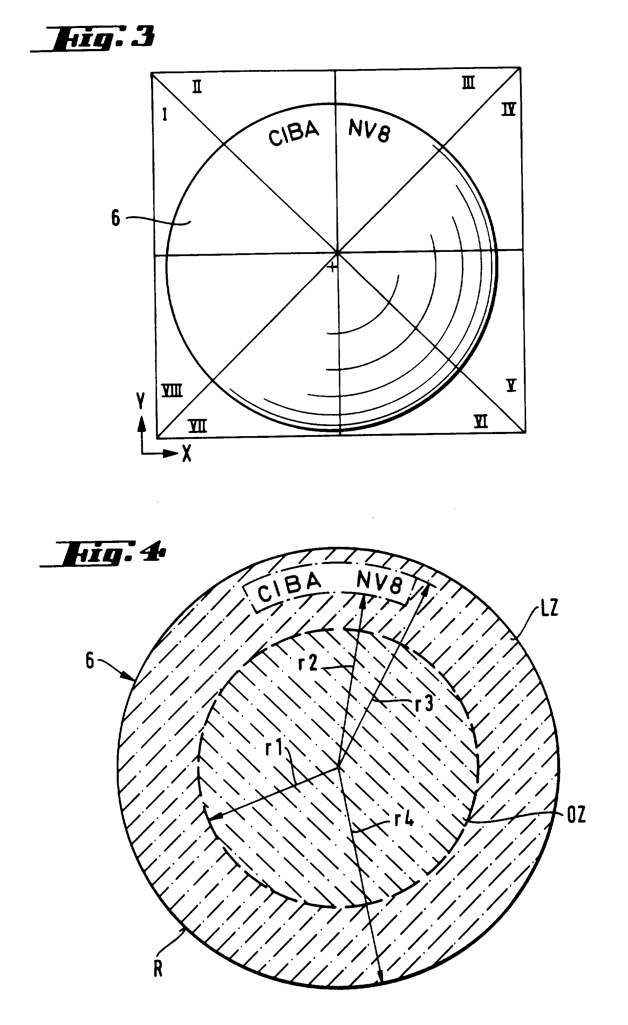

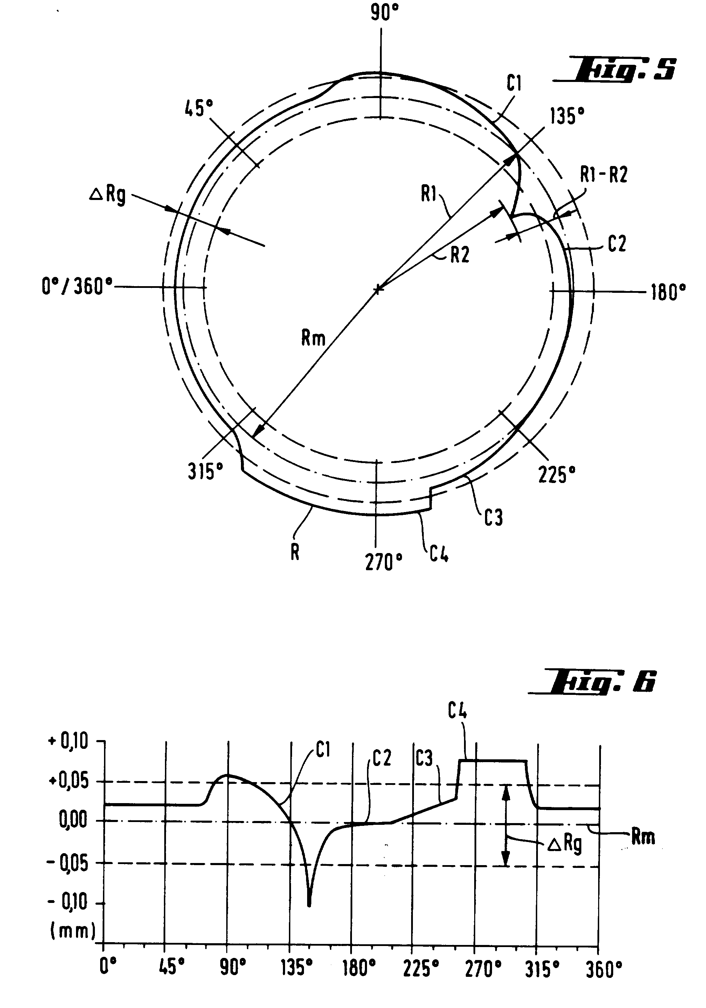

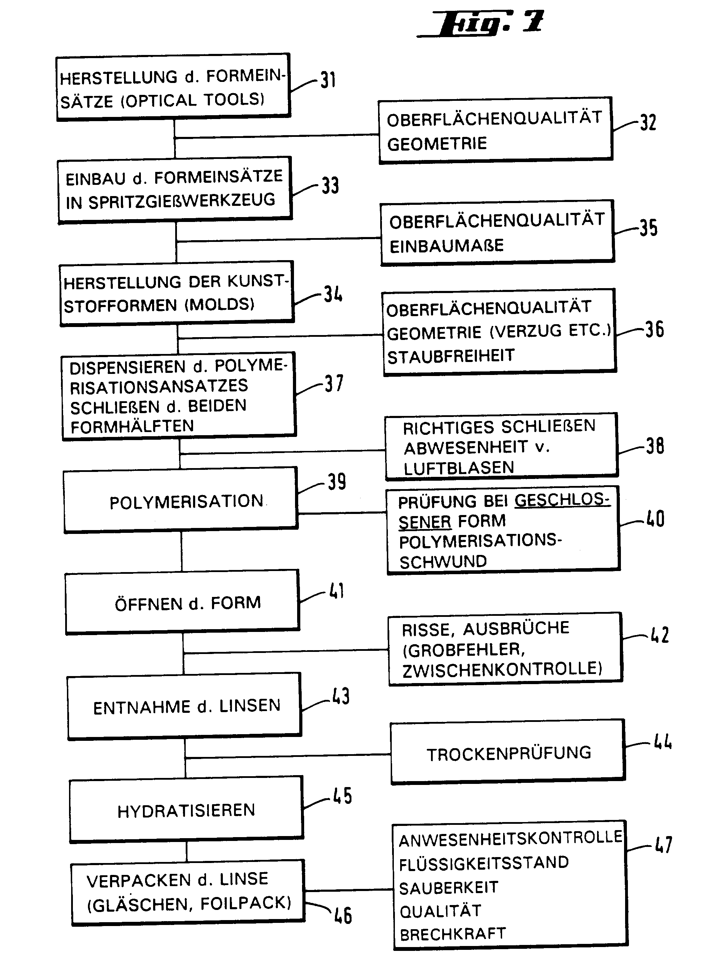

Ein Bilderfassungsspeicher 20 erhält von der Ausleseeinrichtung 7 (Fig. 1) das von der Videokamera bzw. dem Bildsensor 4 der Bildaufnahmeeinrichtung 3 erfasste Bild des zu prüfenden Bauteils 6. Dieses Bild kann die in der Fig. 2 dargestellte Form aufweisen. Um für die Qualitätskontrolle das zu prüfende Bauteil 6 zentriert und richtig in der Bilderzeugungseinrichtung 1 und Bildverarbeitungseinrichtung 2 anzuordnen, ist eine Ausricht- und Zentriersteuereinrichtung 22 mit der Bilderfassungseinrichtung 20 verbunden. Die Steuereinrichtung 22 steuert die Halte- und Transporteinrichtung 8 (Fig. 1) entsprechend an, wenn der Prüfling 6 nicht zentriert angeordnet ist. Zur Positionierung der Linse in dem in der Fig. 3 dargestellten quadratischen Feld wird zunächst der Linsenrand erfaßt welcher die äußere Begrenzung des Suchfeldes darstellt. Bei der Positionierung wird dann von "außen nach innen" gesucht.

Da Kontaktlinsen üblicherweise eine Gravur aufweisen, ist es erforderlich, bei der Prüfung diese Gravur auszusparen, da sie sonst eine Fehleranzeige veranlassen würde. Hierzu ist das in Fig. 3 dargestellte quadratische Feld in acht Sektoren unterteilt. Beim dargestellten Ausführungsbeispiel erfolgt die Positionierung so, daß die Gravur hälftig in den beiden Sektoren II und III angeordnet ist. Die eine Hälfte der Gravur befindet sich links von der Zwölf-Uhr-Stellung, und die andere Hälfte der Gravur befindet sich rechts von der Zwölf-Uhr-Stellung, wobei beide Gravurhälften den gleichen Abstand zur Zwölf-Uhr-Stellung aufweisen. Damit der Prüfling 6 richtig positioniert wird, kann die Halte- und Transporteinrichtung 8 eine x-y-verschiebeeinrichtung aufweisen.

Wenn das zu prüfende Bauteil 6 aus verschiedenen Zonen bzw. Teilen gebildet wird, für die unterschiedliche QualitätsStandards ausreichen oder auch gefordert werden, ist es von Vorteil, eine entsprechende Zoneneinteilung am erfaßten Bild (Fig. 2) des zu prüfenden Bauteils 6 vorzunehmen.

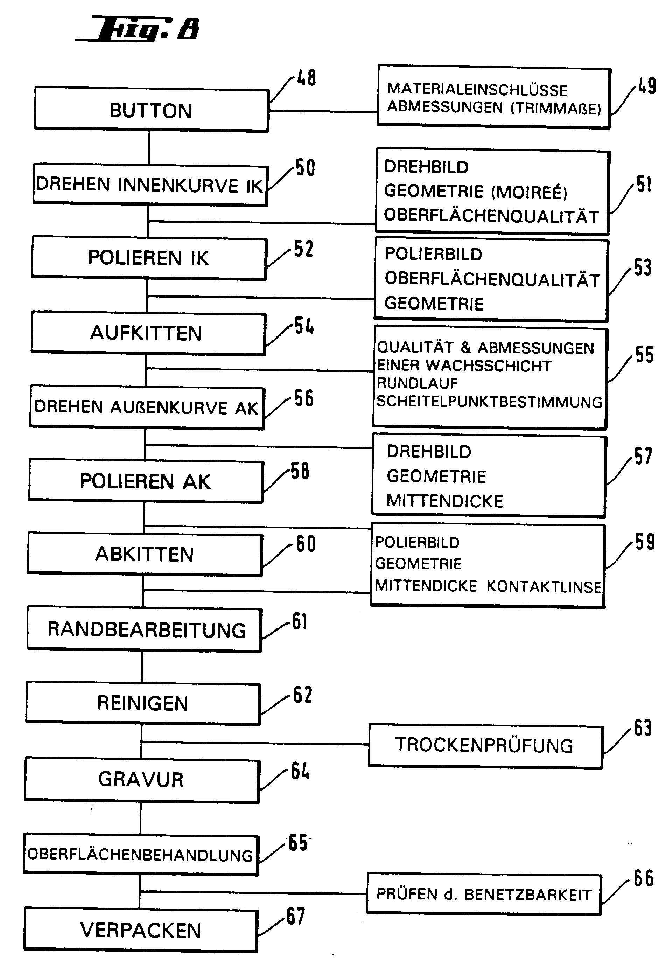

In der Fig. 4 ist beispielsweise für eine Kontaktlinse eine derartige Zonenaufteilung schematisch dargestellt. Durch einen Bereich, der durch einen Radius r1 erfaßt ist, ist eine Optikzone OZ der Kontaktlinse festgelegt. Durch Radien r2 und r3 ist eine auszublendende Schriftzone im Gravurwinkelbereich festgelegt.

Durch einen Bereich zwischen Radien r1 und r4 ist eine Lentikularzone LZ definiert, und durch den Radius r4 ist der Rand R der Linse definiert.

Für die optische OZ und für die Lentikularzone LZ lassen sich unterschiedliche Fehlergrenzen festsetzen, wobei die Fehlergrenze für die optische Zone OZ niedriger festzusetzen ist als die Fehlergrenze für die Lentikularzone LZ. Auch für den Rand R kann eine Randfehlergrenze festgelegt werden; beispielsweise dürfen die Längs- und/oder Querabmessungen nicht größer als 50µm sein. Die Fehlergrenze kann jedoch bei der Erfindung auch noch niedriger, beispielsweise bei 20µm, angesetzt werden. Dies gilt auch für die Fehlergrenzen im optischen Bereich OZ und im Lentikularbereich LZ. Je nachdem, wie hoch die Qualität der Kontaktlinse bzw. des zu prüfenden Bauteils 6 sein soll, wird die Fehlergrenze (Fehlerschwelle) angesetzt.

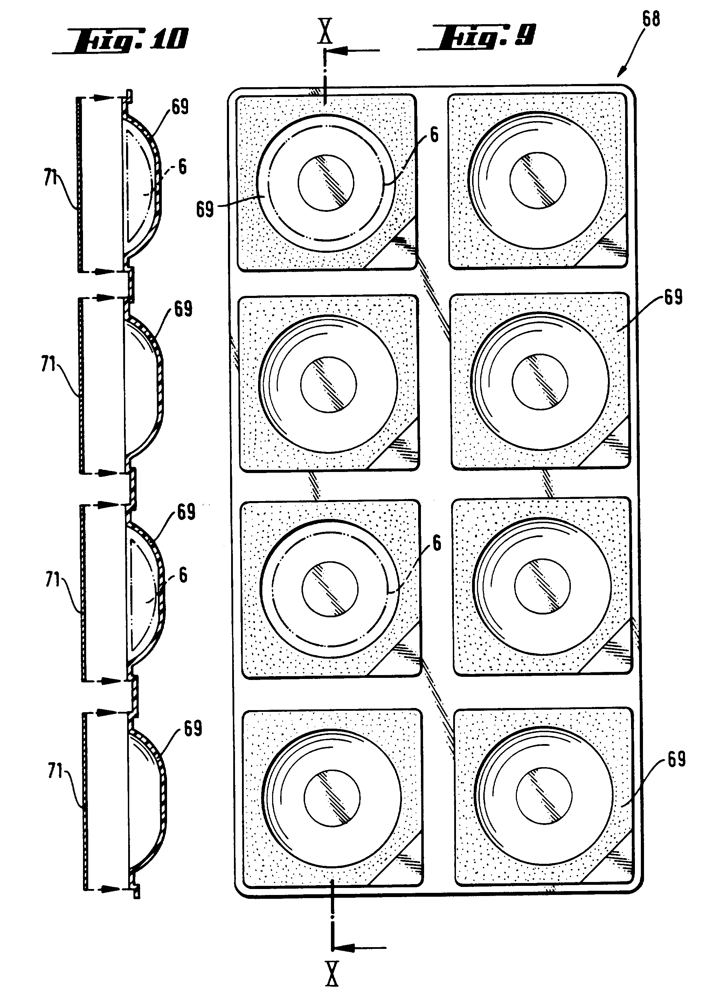

Während für die flächenhaften Zonen des Bildes entsprechende zugeordnete Fehlerschwellen festgelegt sind, läßt sich für den Kontaktlinsenrand R nach dem in den Figuren 5 und 6 dargestellten Prinzip eine Fehlererfassung durchführen. Es können hier verschiedene Kriterien einzeln oder insgesamt berücksichtigt werden. Ein Kriterium kann sein, ob der Radius an einer bestimmten Randstelle von einem mittleren Radius Rm über eine vorgegebene Radiusabweichung △ Rg/2hinaus abweicht oder nicht. Ferner kann als Kriterium berücksichtigt werden, ob diese zu starken Radiusabweichungenin ihrer Gesamtheit eine bestimmte Schwelle überschreiten oder nicht. Schliesslich kann noch als Kriterium untersucht werden, ob die Kurvenform des Randes stark von einer Kreisform abweicht oder nicht, wie das beispielsweise zwischen denbeiden Kurventeilen C1 und C2 bzw. zwischen den Kurventeilen C3 und C4 in Fig. 5 dargestellt ist. Fig. 6 zeigt beispielsweise, dass etwa bei 150° eine starke Radiusabweichung vorhanden ist. In Fig. 5 ist diese mit R1-R2 dargestellt. Aus Fig. 6 ist auch die starke Abweichung des Randes von der Kreisform zwischen den Kurventeilen C3 und C4 erkenntlich. Ferner ist aus der Fig. 6 auch eine starke Radiusabweichung im Bereich von etwa 260° bis 300° erkennbar.

Die angesprochenen Fehler lassen sich in der Bildanalyseeinrichtung 9 (Fig. 1) mit Hilfe einer Speichereinrichtung 21 (Fig. 11), in welcher die in Fig. 4 gezeigte Zoneneinteilung festgelegt ist, in Zusammenwirkung mit Grenzwertspeichern erfassen. Beispielsweise sind für die optische Zone OZ ein Grenzwertspeicher 27, für die Lentikularzone LZ ein Grenzwertspeicher 28 und für den R and R ein dritter Grenzwertspeicher 29 vorgesehen. Für die entsprechenden Zonen sind zugeordnete Pixelzähler 23 vorhanden. Die Pixelzähler, welche Werte für die Fehlergrössen in den jeweiligen Zonen angeben, liefern diese Werte an Vergleicher 24, 25 und 26, die mit den beschriebenen zugeordneten Grenzwertspeichern 27, 28 und 29 verbunden sind. Das Vergleichsergebnis kann in einem Zwischenspeicher 30 für die jeweiligen Zonen abgelegt werden und gegebenenfalls zusammen mit dem erfassten Bild im Bilderfassungsspeicher 20 an einem Monitor wiedergegeben werden. sungsspeicher 20 an einem Monitor wiedergegeben werden.

Ferner wird in Abhängigkeit von den jeweiligen Vergleichsergebnissen der Vergleicher 24, 25 und 26 entweder über den Zwischenspeicher 30 oder direkt ein Aussortierer 11 (Fig. 1) angesteuert. Dieser Aussortierer 11 ist mit der Halte- und Transporteinrichtung 8 verbunden bzw. in Wirkverbindung. Dies ist durch eine strichlierte Linie in Fig. 1 schematisch dargestellt. Das zu prüfende Bauteil 6 wird dann in Abhängigkeit auf der Halte- und Transporteinrichtung 8 belassen, wenn es gemäß dem Vergleichsergebnis den Qualitätsanforderungen genügt. Das zu prüfende Bauteil 6 wird dann in die nächste Bearbeitungsstation übergeführt. Falls das Bauteil 6 den Qualitätsanforderungen nicht genügt, wird es durch die Wirkung des Aussortierers 11 aus der Halte- und Transporteinrichtung 8 entfernt.

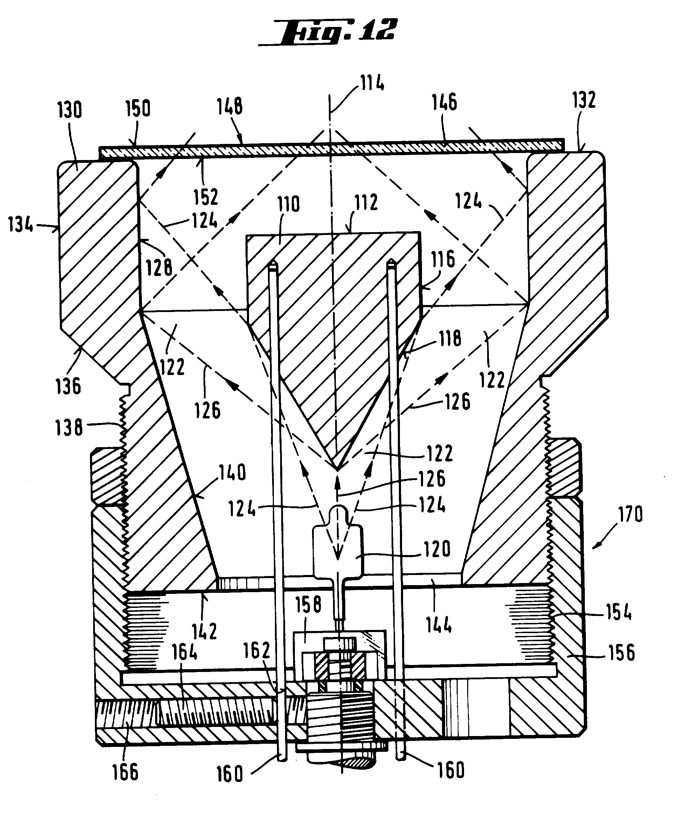

Ein Ausführungsbeispiel der Einrichtung zur Beleuchtung des Prüfobjekts, z.B. zur Beleuchtung der Kontaktlinse, ist in Fig. 12 dargestellt. Dort ist mit 110 ein zentraler erster Reflektorkörper bezeichnet. Der erste Reflektorkörper 110 weist eine ebene, obere Stirnfläche 112 auf. Die obere Stirnfläche 112 erstreckt sich senkrecht zu einer Systemachse 114. Anschliessend an die Stirnfläche 112 weist derReflektorkörper 110 eine zu der Systemachse 114 koaxiale, zylindrische Mantelfläche 116 auf. Auf der Unterseite bildet der Reflektorkörper 110 einen konvex-konischen, ersten Reflektor 118. Die Konusachse des Reflektors 118 fällt mit der Systemachse 114 zusammen.

Unterhalb des Reflektorkörpers 110 ist auf der Systemachse 114 eine Lichtquelle 120 angeordnet. von der Lichtquelle 120 fällt ein zentrales Lichtbündel 122 auf den konvex-konischen, ersten Reflektor 118. Das Lichtbündel 122 wird von dem ersten Reflektor 118 radial auseinandergefächert. In der Zeichnung sind die Randstrahlen 124 und der längs der Systemachse 114 verlaufende Zentralstrahl 126 des Lichtbündels 122 vor und nach der Reflexion an dem ersten Reflektor 118 dargestellt.

Das radial auseinandergefächerte Lichtbündel 122 fällt auf einen zweiten Reflektor 128. Der zweite Reflektor 128 ist konkav-zylindrisch und koaxial zu der Systemachse 114. Der zweite Reflektor 128 ist an einem zweiten Reflektorkörper 130 angebracht. Der zweite Reflektorkörper weist eine ringförmige, ebene Stirnfläche 132 auf. An die Stirnfläche 132 schliesst sich innen der zylindrische Reflektor 128 an. Auf der Aussenseite weist der Reflektorkörper 130, anschliessend an die Stirnfläche 132, eine zylindrische Mantelfläche 134 koaxial zu dem Reflektor 128 auf. Anschliessend an die zylindrische Mantelfläche 134 bildet der Reflektorkörper 130 einen konischen Abschnitt 136. An den konischen Abschnitt 136 schliesst sich ein zylindrischer, mit einem Aussengewinde versehener Abschnitt 138 an. Auf der Innenseite schliesst sich an den zylindrischen Reflektor 128 ein konischer Abschnitt 140 an. Unten bildet der Reflektorkörper 130 eine untere Stirnfläche 142 mit einer zentralen öffnung 144. Durch diese Öffnung 144 ragt die Lichtquelle 120 in das Innere des Reflektorkörpers 130.

Auf der oberen Stirnfläche 132 des Reflektorkörpers 130 liegt eine klar-transparente Platte 146, welche mit ihrer planen Oberseite eine Auflage 148 für die Prüfobjekte bildet. Die von der Auflage 148 definierte Auflageebene ist senkrecht zur Systemachse 114 und dementsprechend parallel zu der Stirnfläche 112 des ersten Reflektorkörpers 110. Die Platte 148 ist oben und unten mit reflexmindernden Schichten 150, 152 versehen. Der konkav-zylindrische zweite Reflektor 128 reflektiert das radial auseinandergefächerte Lichtbündel 122 so, dass es fast streifend in der Mitte der Auflage 148 in einem Lichtfleck gesammelt wird.

Der zweite Reflektorkörper 130 ist mit dem mit Aussengewinde versehenen Abschnitt 138 in einen mit einem Innengewinde 154 versehenen, topfförmigen Gehäuseteil 156 eingeschraubt. Der Gehäuseteil 156 trägt innen auf der Systemachse 114 einen Sockel 158 für die Lichtquelle 120. Ausserdem sind im Boden des topfförmigen Gehäuseteils 156 Tragstangen 160 gehaltert, welche den ersten Reflektorkörper 110 tragen. Die Tragstangen 160 sind durch fluchtende Durchbrüche im Boden des Gehäuseteils 156 sowie durch eine Querbohrung 162 von Klemmschrauben 164 geführt. Die Klemmschrauben 164 sitzen in radialen Gewindebohrungen 166 im Boden des Gehäuseteils 156 zwischen den besagten fluchtenden Durchbrüchen. Die Klemmschrauben 164 können gelöst werden. Dann sind die Tragstangen 160 und damit der erste Reflektorkörper 110 relativ zu dem topfförmigen Gehäuseteil 156 höhenverstellbar. Es ist so eine Justage des Reflektorkörpers 110 relativ zu der Lichtquelle 120 möglich. Der Gehäuseteil 156, die Lichtquelle 120 und der erste Reflektorkörper 110 bilden eine zusammenhängende Baugruppe 170, die als Ganzes über das Innengewinde 154 und den mit Aussengewinde versehenen Abschnitt 138 des zweiten Reflektorkörpers 130 relativ zu dem zweiten Reflektorkörper 130 und damit zu dem zweiten Reflektor 128 und der Auflage 148 in Richtung der Systemachse 114 verstellbar ist (oder umgekehrt).

Durch diese Verstellung wird einmal der in der Auflageebene erzeugte Lichtfleck an die Abmessungen der Prüfobjekte angepasst. Weiterhin kann das Gerät so eingestellt werden, dass sich optimaler Kontrast für die Fehlererkennung ergibt.

Die Reflektoren 118 und 128 können spiegelnd ausgebildet sein. Die Oberflächen des ersten und des zweiten Reflektors 118 bzw. 128 können aber auch teildiffus-reflektierend ausgebildet sein.

Eine alternative Lösung kann darin bestehen, dass die Lichtquelle ein Kaltleiter-Ringlicht ist. Die Einstellbarkeit der Beleuchtungsgeometrie kann dann darin bestehen, dass die Abstrahlcharakteristik des Kaltleiter-Ringlichts an die Geometrie des Prüfobjekts anpassbar ist.

Anhand der Figungen 7 und 8 wird nun noch an zwei verschiedenen Herstellungsverfahren für Kontaktlinsen demonstriert, wie die erfindungsgemässe Bildanalyse in Kombination mit anderen Bildverarbeitungsverfahren in den Herstellungsprozeß bei verschiedenen Herstellungsstufen bzw. -schritten integriert werden kann, so daß ein automatischer Ablauf der Gesamtherstellung der Kontaktlinse erreicht wird.

In der Fig. 7 ist ein sogenanntes Fullmold-Verfahren, welches ein Formgießen der Kontaktlinse beinhaltet, in seinen einzelnen Schritten dargestellt mit integrierter automatischer Prüfung mit Hilfe der erfindungsgemäßen Bildanalyse. Fullmold-Verfahren sind bekannt (z. B. EP 0 367 513 und Wo 87/04390).

In einem Herstellungsschritt 31 werden die Formeinsätze (optical tools), die aus hochwertigen Metallen/Legierungen bestehen, beispielsweise durch spanende Bearbeitung hergestellt. Hier kann bereits ein erster Prüfschritt 32 mit Hilfe einer Bildanalyse durchgeführt werden. Dieser Prüfschritt kann die Oberflächenqualität der Formeinsätze und die Geometrie der Formeinsätze prüfen. Anschließend werden in einem Schritt 33 die Formeinsätze in ein Spritzgießwerkzeug eingesetzt. Auch hier kann eine optische Prüfung mit Hilfe einer Bildanalyse in einem Prüfschritt 35 zur Überprüfung der Oberflächenqualität und der Einbaumaße durchgeführt werden.

Hieran schließt sich die Herstellung der Kunststoff-formen, d. h. der beiden Formhälften (Molds), in denen die Kontaktlinse durch Formgießen hergestellt werden soll, an (Herstellungsschritt 34). Auch hier kann ein Prüfschritt 36 mit Bildanalyse integriert werden, so daß die Oberflächenqualität, die Geometrie (Verzug und dgl.) sowie Staubfreiheit der hergestellten Formhälften überprüft werden kann. Hieran schließt sich das Dispensieren des Polymerisationsansatzes für das Kontaktlinsenmaterial und das Schließen der beiden Formhälften in einem Schritt 37 an. Hier kann ebenfalls ein Prüfschritt 38 integriert werden, bei dem mit Hilfe der erläuterten Bildanalyse das richtige Schließen und das Vorhandensein von Luftblasen ermittelt werden kann.

Es erfolgt dann in einem Schritt 39 die Polymerisation des Kontaktlinsenmaterials, das von den beiden Formhälften umschlossen ist. Hierbei kann in einem Prüfschritt 40 bei geschlossener Form, die lichtdurchlässig ist, nicht nur der Ablauf der Polymerisation, sondern auch der Polymerisationsschwund des polymerisierten Materials und eine geeignete Nachstellung der beiden Formhälften in diesem Zusammenhang überwacht werden. Gegebenenfalls kann in Abhängigkeit vom Ergebnis der Bildanalyse und in Abhängigkeit vom festgestellten Polymerisationsschwund das Nachstellen der beiden Formhälften zur Kompensierung des Polymerisationsschwundes gesteuert werden.

In einem weiteren Fertigungsschritt 41 erfolgt das Öffnen der beiden Formhälften. Im Rahmen eines integrierten Prüfschrittes 42 kann hier eine Zwischenkontrolle durchgeführt werden im Hinblick auf grobe Fehler, wie Risse, Ausbrüche und dgl. am hergestellten Linsenkörper.

Im anschließenden Fertigungsschritt 43 wird die Kontaktlinse aus der Form entnommen, und es kann an der Kontaktlinse mit Hilfe der erläuterten Bildanalyse in einem Prüfschritt 44 eine Trockenprüfung durchgeführt werden. Hieran kann sich in einem Fertigungsschritt 45 die Hydratisierung des Linsenkörpers anschließen. In einem weiteren Fertigungsschritt 46 wird die Linse (trocken oder hydratisiert) in Gläschen oder in sogenannten Foilpacks 68, welche in den Figuren 9 und 10 dargestellt sind, eingebracht.

Anschließend kann in einem Prüfschritt 47 überprüft werden, ob die Linse in den Aufbewahrungsbehälter 69 eingebracht wurde. Dies erfolgt im Rahmen einer sogenannten Anwesenheitskontrolle. Ausserdem kann überwacht werden, ob der Flüssigkeitsstand im Aufbewahrungsbehälter stimmt. Ferner kann die Sauberkeit der Aufbewahrungsflüssigkeit sowie der Linse selbst überwacht werden. Ferner können Linsenqualität und Brechkraft einer Endprüfung unterzogen werden. Die im Prüfschritt 47 erläuterten Prüfungen können mit Hilfe der oben beschriebenen Bildanalyse durchgeführt werden. Anschließend werden die Behälter (Fig. 9, 10) mit den Deckfolien 71 durch Schweißen verschlossen.

In der Fig. 8 ist ein Drehverfahren erläutert, mit dem ebenfalls eine Kontaktlinse hergestellt werden kann. Bei diesem Drehverfahren wird in einem Fertigungsschritt 48 ein Button von einer Stange aus Kontaktlinsenmaterial abgeschnitten und in ein Spannfutter einer Drehmaschine eingesetzt. Drehautomaten sind bekannt. Es wird hierzu beispielsweise auf die deutsche Patentschrift 31 10 624 verwiesen. In einem Prüfschritt 49 kann beispielsweise mit Hilfe der oben beschriebenen Bildanalyse der Button im Hinblick auf Materialeinschlüsse, auf seine Abmessungen (Trimmaße) hin überprüft werden. In einem Fertigungsschritt 50 wird durch Drehen mit Hilfe eines Drehwerkzeugs im Drehautomaten eine Innenkurve IK am Button hergestellt. In einem nachfolgenden Prüfschritt 51 kann durch Bildanalyse das Drehbild und die Oberflächenqualität und gegebenenfalls auch die Geometrie, für welches auch ein bekanntes Moiree-Verfahren zum Einsatz gebracht werden kann, überprüft werden.

In einem weiteren Fertigungsschritt 52 erfolgt das Polieren der Innenkurve IK. Gegebenenfalls kann in einem Prüfschritt 53 das Polierbild, die Oberflächenqualität und noch einmal die Geometrie der Innenkurve überprüft werden.

Es erfolgt dann das Aufkitten des Buttons auf eine Spindel des Drehautomaten in einem Fertigungsschritt 54. Dabei wird der Button mit seiner Innenkurve auf die Spindel aufgekittet. Auch hierbei können in einem Prüfschritt 55 mit Hilfe einer optischen Bildanalyse die Qualität und die Abmessungen der Wachsschicht, welche zum Aufkitten dient, sowie der Rundlauf und eine Scheitelpunktbestimmung durchgeführt werden.

Anschliessend wird in einem Fertigungsschritt 56 dieAussenkurve AK gedreht. Das Drehbild, die Geometrie sowie die Mittendicke der fertiggestellten Linse können in einem Prüfschritt 57 überprüft werden.

Es erfolgt dann in einem Fertigungsschritt 58 das Polieren der Aussenkurve AK. In einem Prüfschritt 59 können dann das Polierbild, die Geometrie und die Mittendicke der Kontaktlinse überprüft werden. Der Prüfschritt 57 kann in diesem Falle auch entfallen.

In einem Fertigungsschritt 60 wird die Kontaktlinse von der Kalotte des Drehautomaten abgekittet. In einem FertigungsSChritt 61 erfolgt die Randbearbeitung der Kontaktlinse. In einem sich anschließenden Fertigungsschritt 62 erfolgt die Reinigung der Kontaktlinse. An die Reinigung der Kontaktlinse kann sich ein Prüfschritt 63 anschließen, in welchem mit Hilfe der Bildanalyse (z.B. Fig. 1) eine Trockenprüfung der Kontaktlinse durchgeführt wird.

Hieran schließt sich als Fertigungsschritt 64 die Gravur der Kontaktlinse an. In diese wird dann die beispielsweise aus den Figuren 3 und 4 ersichtliche Gravur in den Kontaktlinsenkörper eingeprägt. Hieran schließt sich dann als Fertigungsschritt 65 eine Oberflächenbehandlung der Kontaktlinse an. Diese hat insbesondere den Vorteil, daß die Oberfläche der Linse für die Tränenflüssigkeit benetzbar gemacht wird. In einem Prüfschritt 66 kann dann die Prüfung der Benetzbarkeit ebenfalls mit Hilfe der Bildanalyse (z.B. Fig.1) durchgeführt werden. Durch die Bildanalyse läßtsich nämlich feststellen, ob auf der Oberfläche Tröpfchenbildung erfolgt oder ob die Linsenoberfläche von der Flüssigkeit flächig benetzt wird.

In einem weiteren Fertigungsschritt 67 erfolgt das Einlegen der Linse beispielsweise in Foilpacks (Fig. 9, 10). Hieran kann sich dann, wei bei dem in Fig. 7 dargestellten Fullmold-Verfahren, ein Prüfschritt anschließen, der dem Prüfschritt 47 entspricht. Anschließend erfolgt das Aufschweißen der Deckfolien auf die Behälter.

Aus obiger Erläuterung, insbesondere im Zusammenhang mit den Figuren 7 und 8, ergibt sich, daß mit Hilfe der optischen Bildanalyse eine vollständige Überwachung und damit 100 %ige Automatisierung bei der Fertigung von optischen Bauteilen erreicht werden kann. Dies gilt insbesondere bei der Herstellung von Kontaktlinsen. Hierdurch wird die gewünschte Produktqualität durch ständige Überwachung (in-process-Kontrolle) des gesamten Fertigungsablaufes garantiert, so daß unter Umständen auf eine Endkontrolle verzichtet werden kann. Vor allem für in großen Stückzahlen herzustellende Kontaktlinsen (Wegwerflinsen) ist eine solche Überwachung von Vorteil. Die durch die Erfindung gewährleistete Qualitätskontrolle richtet sich nach vorgebbarem Qualitätsstandard und ist damit eine reproduzierbare und objektive Qualitätskontrolle.

## Patentansprüche

1. Verfahren zur Prüfung von transparenten optischen Bauteilen, bei welchem Verfahren durch Abbildung und durch anschliessende Bildanalyse Fehler am abgebildeten Bauteil festgestellt werden, dadurch gekennzeichnet, dass die Abbildung des Bauteils mittels einer an das Bauteil anpassbaren Dunkelfeldbeleuchtung erfolgt, wodurch ein flächenhaftes Kontrastbild des Bauteils erzeugt wird, dass von dem so beleuchteten Bauteil zu einem einzigen Zeitpunkt ein Bild des gesamten Bauteils aufgenommen wird und die Bildfläche der sichtbar gemachten Fehler bestimmt und mit einem oder mehreren Grenzwerten verglichen wird.

2. Verfahren nach Anspruch 1, dadurch gekennzeichnet, dass das Bild des Bauteils mit einem CCD-Bildsensor aufgenommen wird.

3. Verfahren nach Anspruch 1 oder 2, dadurch gekennzeichnet, dass die Bildfläche der jeweils erfassten Fehler in Pixel unterteilt und die Pixel gezählt werden, und dass die ermittelte Pixelanzahl mit einer vorbestimmten Pixelanzahl verglichen wird.

4. Verfahren nach einem der Ansprüche 1 bis 3, dadurch gekennzeichnet, dass die Fehlererfassung bei einem oder mehreren Fertigungsschritten bei der Herstellung des Bauteils geführt wird.

5. Verfahren nach einem der Ansprüche 1 bis 4, dadurch gekennzeichnet, dass die Fehlererfassung bei der Herstellung augenoptischer Bauteile durchgeführt wird.

6. Verfahren nach einem der Ansprüche 1 bis 5, dadurch gekennzeichnet, dass für verschiedene Zonen des zu prüfenden Bauteils unterschiedliche Grenzwerte als Qualitätsstandards festgelegt werden.

7. Verfahren nach einem der Ansprüche 1 bis 6, dadurch gekennzeichnet, dass bei der Prüfung einer Kontaktlinse für die optische Zone die Lentikularzone und der Rand der Linse unterschiedliche Grenzwerte als Qualitätsstandards festgelegt werden.

8. Vorrichtung zur Prüfung von transparenten optischen Bauteilen mit einer optischen Bilderzeugungseinrichtung, welche eine Beleuchtungseinrichtung zur Beleuchtung des Bauteils aufweist, und mit einer Bildverarbeitungseinrichtung (2), welche eine Bildaufnahmeeinrichtung (3) aufweist, dadurch gekennzeichnet, dass die Beleuchtungseinrichtung (1) als Dunkelfeldbeleuchtungseinrichtung mit einer Lichtquelle (120) und einer Dunkelfeldbeleuchtungsoptik (118, 128) ausgebildet ist, deren Geometrie zur Anpassung an das Bauteil einstellbar ist, sodass ein Kontrastbild des Bauteils erzeugt wird, und dass die Bildaufnahmeeinrichtung (3) einen Bildsensor (4) aufweist, welcher zu einem einzigen Zeitpunkt ein Bild des gesamten Bauteils aufnimmt zur Flächenbestimmung der jeweils im Kontrastbild erfassten Fehler und zum Vergleich der Flächen der Fehler mit einem oder mehreren Grenzwerten.

9. Vorrichtung nach Anspruch 8, dadurch gekennzeichnet, dass der Bildsensor (4) als CCD ausgebildet ist.

10. Vorrichtung nach Anspruch 8 oder 9, dadurch gekennzeichnet, dass an den Bildsensor (4) eine Ausleseeinrichtung (7) zum pixelweisen Auslesen der abgebildeten Fehlerflächen angeschlossen ist.

11. Vorrichtung nach einem der Ansprüche 8 bis 10, dadurch gekennzeichnet, dass die Bildverarbeitungseinrichtung (2) einen Vergleicher (24,25,26) aufweist, der an eine Flächenbestimmungseinrichtung (20,21,23) und an eine Grenzwertspeichereinrichtung (27,28,29) angeschlossen ist.

12. Vorrichtung nach einem der Ansprüche 8 bis 11, dadurch gekennzeichnet, dass die Grenzwerte vorgegebene Flächengrössen sind.

13. Vorrichtung nach einem der Ansprüche 8 bis 12, dadurch gekennzeichnet, dass
(a) unter einer Auflage (148) mit einer Auflageebene für das zu prüfende Bauteil ein erster Reflektorkörper (110) vorgesehen ist,
(b) der erste Reflektorkörper (110) eine zu der Auflageebene der Auflage (148) im wesentlichen parallele Stirnfläche (112) aufweist, die einen Objekthintergrund für das Bauteil bildet,
(c) der erste Reflektorkörper (110) weiterhin einen der besagten Stirnfläche (112) abgewandten konvex-konischen ersten Reflektor (118) aufweist, dessen Konusachse mit einer senkrecht zu der Stirnfläche (112) verlaufenden Systemachse (114) zusammenfällt,
(d) die Lichtquelle (120) auf der Systemachse (114) angeordnet ist und
(e) ein zweiter Reflektorkörper (130) mit einem konkaven Ringreflektor (128) gleichachsig zu der Systemachse (114) angeordnet ist.

14. Vorrichtung nach Anspruch 13, dadurch gekennzeichnet, dass der konkave Ringreflektor (128) zylindrisch ist.

15. Vorrichtung nach Anspruch 13 oder 14, dadurch gekennzeichnet, dass die Lichtquelle (120) mit dem ersten Reflektor (118) in einer Baugruppe (170) vereinigt ist, die längs der Systemachse (114) relativ zu dem zweiten Reflektorkörper (130) und der Auflage (148) verstellbar ist.

16. Vorrichtung nach einem der Ansprüche 13 bis 15, dadurch gekennzeichnet, dass die Lichtquelle ein Kaltleiter-Ringlicht ist.

17. Vorrichtung nach Anspruch 16, dadurch gekennzeichnet, dass die Abstrahlcharakteristik des Kaltleiter-Ringlichts an die Geometrie des Bauteils anpassbar ist.

18. Vorrichtung nach einem der Ansprüche 13 bis 17, dadurch gekennzeichnet, dass als Aufnahme (148) für das Bauteil eine beidseitig mit einer Antireflexschicht versehene Platte (146) vorgesehen ist.

19. Vorrichtung nach einem der Ansprüche 13 bis 15, dadurch gekennzeichnet, dass der erste (118) und der zweite (120) Reflektor spiegelnd augebildet sind.

20. Vorrichtung nach einem der Ansprüche 13 bis 15, dadurch gekennzeichnet, dass die Oberflächen des ersten (118) und des zweiten (120) Reflektors teildiffus-reflektierend ausgebildet sind.

## Claims

1. A process for examining transparent optical components in which process, by means of image formation and subsequent image analysis, flaws in the imaged article are detected, which process comprises forming an image of the component by means of dark field illumination which can be adapted to the component, as a result of which a two-dimensional high-contrast image of the component is produced and, at a single point in time, recording an image of the entire component from the so-illuminated component, and determining the image area of the flaws rendered visible and comparing the image area of the flaws with one or more threshold values.

2. A process according to claim 1, wherein the image of the component is recorded using a CCD image sensor.

3. A process according to either claim 1 or claim 2, wherein the image area of the flaws detected is divided into pixels and the pixels are counted, and the number of pixels ascertained is compared with a predetermined number of pixels.

4. A process according to any one of claims 1 to 3, wherein the detection of flaws is carried out at one or more production stages in the manufacture of the component.

5. A process according to any one of claims 1 to 4, wherein the detection of flaws is carried out in the manufacture of optical components for the eye.

6. A process according to any one of claims 1 to 5, wherein different threshold values are set as quality standards for different zones of the component to be examined.

7. A process according to any one of claims 1 to 6, wherein, in the examination of a contact lens, different threshold values are set as quality standards for the optical zone, the lenticular zone and the perimeter of the lens.

8. An apparatus for examining optical components, comprising an optical image-producing device, which has an illumination means for illuminating the component, and an image-processing device (2), which has an image-recording means (3), wherein the illumination means (1) is in the form of a dark field illumination means having a light source (120) and dark field illumination optics (118, 128) of which the geometry is adjustable to enable adaptation to the component so that a high-contrast image of the component is produced, and wherein the image-recording means (3) has an image sensor (4) that at a single point in time records an image of the entire component in order to determine the area of the flaws detected in the high-contrast image and compare the area of the flaws with one or more threshold values.

9. An apparatus according to claim 8, wherein the image sensor (4) is in the form of a CCD.

10. An apparatus according to claim 8 or claim 9, wherein a reading means (7) for reading the imaged flaw areas by pixels is connected to the image sensor (4).

11. An apparatus according to any one of claims 8 to 10, wherein the image-processing device (2) has a comparator (24, 25, 26) which is connected to an area determination means (20, 21, 23) and to a threshold value storage means (27, 28, 29).

12. An apparatus according to any one of claims 8 to 11, wherein the threshold values are preset area sizes.

13. An apparatus according to any one of claims 8 to 12, wherein
(a) a first reflector body (110) is arranged below a support (148) having a support plane for the component to be examined,
(b) the first reflector body (110) has an end face (112) essentially parallel to the supporting plane of the support (148), which end face forms a background for the component,
(c) the first reflector body (110) furthermore has, remote from the said end face (112), a convex-conical first reflector (118) of which the cone axis coincides with a system axis (114) that extends at right angles to the end face (112),
(d) the light source (120) is arranged on the system axis (114) and
(e) a second reflector body (130) having a concave annular reflector (128) is arranged coaxially with the system axis (114).

14. An apparatus according to claim 13, wherein the concave annular reflector (128) is cylindrical.

15. An apparatus according to claim 13 or claim 14, wherein the light source (120) is combined with the first reflector (118) in an assembly (170) that is displaceable along the system axis (114) relative to the second reflector body (130) and to the support (148).

16. An apparatus according to any one of claims 13 to 15, wherein the light source is a PTC resistor-ring light.

17. An apparatus according to claim 16, wherein the radiation characteristic of the PTC resistor-ring light is adaptable to the geometry of the component.

18. An apparatus according to any one of claims 13 to 17, wherein a plate (146), provided on both sides with an anti-reflection layer, is provided as the support (148) for the component.

19. An apparatus according to any one of claims 13 to 15, wherein the first (118) and the second (120) reflector are specular.

20. An apparatus according to any one of claims 13 to 15, wherein the surfaces of the first (118) and of the second (120) reflector are partially diffuse-reflecting.

## Revendications

1. Procédé de contrôle de composants optiques transparents, procédé suivant lequel la représentation de l'image suivie de l'analyse de l'image permettent de détecter des défauts sur le composant dont l'image a été reproduite, caractérisé en ce que la représentation de l'image du composant est effectuée par un éclairage sur fond sombre adapté au composant de manière qu'une image en contraste du composant sous forme d'éléments de surface soit générée, en ce que, le composant étant ainsi éclairé, une image de l'ensemble du composant est reproduite en un unique instant et la surface de l'image des défauts rendus ainsi visibles est déterminée et comparée à une ou plusieurs valeurs de seuil.

2. Procédé selon la revendication 1, caractérisé en ce que l'image du composant est reproduite par un détecteur d'image à CCD.

3. Procédé selon la revendication 1 ou 2, caractérisé en ce que la surface de l'image de chaque défaut détecté est subdivisée en pixels et les pixels sont comptés et en ce que le nombre déterminé de pixels est comparé à un nombre prédéterminé de pixels.

4. Procédé selon l'une des revendications 1 à 3, caractérisé en ce que la détection des défauts est effectuée au cours d'une ou de plusieurs étapes de fabrication lors de la réalisation du composant.

5. Procédé selon l'une des revendications 1 à 4, caractérisé en ce que la détection de défauts est effectuée lors de la réalisation de composants ophtalmologiques.

6. Procédé selon l'une des revendications 1 à 5, caractérisé en ce que des seuils différents servant de normes de qualité sont fixés pour des zones différentes du composant à contrôler.

7. Procédé selon l'une des revendications 1 à 6, caractérisé en ce que, lors du contrôle d'une lentille de contact, des seuils différents servant de normes de qualité sont fixés pour la zone optique, la zone lenticulaire et le bord de la lentille.

8. Dispositif de contrôle de composants optiques transparents au moyen d'un dispositif optique de génération d'image, qui comprend un dispositif d'éclairage pour l'éclairage du composant, ainsi qu'un dispositif (2) de traitement de l'image qui comprend un dispositif (3) de prise de vue, caractérisé en ce que le dispositif d'éclairage (1) est constitué d'un dispositif d'éclairage sur fond obscur qui comprend une source lumineuse (120) et une optique d'éclairage sur fond obscur (118, 128), dont la géométrie est réglable pour l'adaptation au composant, de manière qu'une image en contraste du composant soit générée et en ce que le dispositif (3) de prise de vue comprend un détecteur d'image (4) qui prend une image de l'ensemble du composant en un unique instant pour la détermination de la surface de chaque défaut détecté dans l'image en contraste et pour la comparaison des surfaces des défauts à une ou plusieurs valeurs de seuil.

9. Dispositif selon la revendication 8, caractérisé en ce que le détecteur d'image (4) est constitué d'un CCD.

10. Dispositif selon la revendication 8 ou 9, caractérisé en ce qu'un dispositif de lecture (7) destiné à la lecture en pixels des surfaces reproduites des défauts est connecté au détecteur d'image (4).

11. Dispositif selon l'une des revendication 8 à 10, caractérisé en ce que le dispositif (2) de traitement de l'image comprend un comparateur (24, 25, 26) qui est connecté à un dispositif de détermination de surface (20, 21, 23) et à un dispositif de mémorisation de seuils (27, 28, 29).

12. Dispositif selon l'une des revendication 8 à 11, caractérisé en ce que les seuils sont des grandeurs prescrites de surface.

13. Dispositif selon l'une des revendication 8 à 12, caractérisé en ce que
(a) un premier corps réflecteur (110) est prévu sous un support (148) comprenant une surface d'appui pour le composant à contrôler,
(b) le premier corps réflecteur (110) comprend une surface extrême (112) qui est sensiblement parallèle au plan d'appui du support (148) et qui forme un fond d'objet pour le composant,
(c) le premier corps réflecteur (110) comprend par ailleurs un premier miroir réflecteur convexe-conique (118) qui est tourné à l'opposé de ladite surface extrême (112) et dont l'axe du cône coïncide avec un axe du système (114) qui est perpendiculaire à la surface extrême (112),
(d) la source lumineuse (120) est disposée sur l'axe du système (114) et
(e) un second corps réflecteur (130) comprenant un miroir réflecteur annulaire concave (108) est disposé coaxialement à l'axe du système (114).

14. Dispositif selon la revendication 13, caractérisé en ce que le miroir réflecteur annulaire concave (128) est cylindrique.

15. Dispositif selon la revendication 13 ou 14, caractérisé en ce que la source lumineuse (120) est réunie avec le premier miroir réflecteur (118) en un module (170) dont la position est réglable le long de l'axe du système (114) par rapport au second corps réflecteur (130) et au support (148).

16. Dispositif selon l'une des revendications 13 à 15, caractérisé en ce que la source lumineuse est une lumière annulaire d'une thermistance PTC.

17. Dispositif selon la revendication 16, caractérisé en ce que la caractéristique de radiation de la lumière annulaire de la thermistance PTC est adaptable à la géométrie du composant.

18. Dispositif selon l'une des revendications 13 à 17, caractérisé en ce qu'une plaque (146) comportant sur les deux côtés une couche anti-réflexion est prévue en support (148) pour le composant.

19. Dispositif selon l'une des revendications 13 à 15, caractérisé en ce que le premier (118) et le second (120) miroirs réflecteurs sont spéculaires.

20. Dispositif selon l'une des revendications 13 à 15, caractérisé en ce que les surfaces du premier (118) et du second (120) miroirs réflecteurs sont réfléchissantes de manière partiellement diffuse.
